# EUROPÄISCHE PATENTSCHRIFT

(11) **EP 0 801 925 B1**
(45) Veröffentlichungstag und Bekanntmachung des Hinweises auf die Patenterteilung: **28.06.2000**
(21) Anmeldenummer: 96107389.7
(22) Anmeldetag: 09.05.1996
(51) Int. Cl.: A47L 13/58

(54) **Reinigungswagen, insbesondere für den Transport von Putzeimern und zum Halten einer Auswringvorrichtung**
Cleaning trolley, in particular for transporting cleaning buckets and holding a wringer
Chariot de nettoyage, en particulier pour le transport de seaux de nettoyage et pour supporter un dispositif d'essorage

(30) Priorität: 18.04.1996 LU 88745
(43) Veröffentlichungstag der Anmeldung: 22.10.1997
(73) Patentinhaber: A.Z. INTERNATIONAL S.A., 2130 Luxembourg (LU)
(72) Erfinder: Baggio, Oriella, 35010 Onara di Tombolo (PD) (IT)
(74) Vertreter: Waxweiler, Jean

(56) Entgegenhaltungen:
- DE-A- 4 322 626
- DE-A- 4 407 014
- DE-U- 8 606 934
- LU-A- 88 687

## Beschreibung

Die Erfindung betrifft einen Reinigungswagen, insbesondere für den Transport von Putzeimern und zum Halten einer Auswringvorrichtung.

Im Bereich der Reinigungsgeräte gehört ein Reinigungswagen für Putzeimer und für eine Auswringvorrichtung zu den bekanntesten und meistverbreiteten Ausrüstungen. Die zahlreichen existierenden Ausführungen und Lösungen zielen alle darauf ab, niedrigste Herstellungskosten zu erreichen, ohne dabei auf eine robuste und solide Beschaffenheit, eine praktische Handhabung und eine einfache Wartung zu verzichten.

Bei bekannten Lösungen (vgl. DE-A-43 22 626) sind die Reinigungswagen entweder ganz aus Metallteilen gefertigt oder sie bestehen aus Metallteilen, die mit Kunststoffteilen zusammengebaut werden. Außerdem kann die Herstellung der Reinigungswagen durch den Zusammenbau nur von Plastik- oder Kunstharzteilen erfolgen.

Die ganz oder teilweise aus Metall bestehenden Strukturen, die zur Herstellung der Reinigungswagen verwendet werden, sind im allgemeinen verchromt. Es ist allgemein bekannt, daß diese Teile durch die ständige Einwirkung von Putzmitteln besonders abnutzungsanfällig sind, weshalb ihre Haltbarkeit zeitlich begrenzt ist. Bei denjenigen Reinigungswagen, die durch Zusammenbauen von Einzelteilen nur aus Kunstharzmaterial, insbesondere Plastik, hergestellt werden, entstehen nicht nur die Fertigungskosten für die einzelnen Komponenten, sondern auch die Montagekosten. Die Solidität dieser Reinigungswagen wird trotz allen getroffenen Vorkehrungen niemals ein zufriedenstellendes Niveau erreichen.

Der vorliegenden Erfindung liegt daher die Aufgabe zugrunde, einen Reinigungswagen zu schaffen, der die genannten Nachteile herkömmlicher Konstruktionen vermeidet und trotzdem mit niedrigen Kosten herstellbar ist.

Diese Aufgabe wird erfindungsgemäß von einem Reinigungswagen mit den Merkmalen des Patentanspruches 1 gelöst.

Der erfindungsgemäße Reinigungswagen weist eine einstückige Rahmenstruktur auf, die aus einem Kunststoffwerkstoff hergestellt ist. Die Rahmenstruktur umfaßt zwei längsseitige Seitenwände, die voneinander beabstandet sind und jeweils zwei Anschlußabschnitte aufweisen, um Räder, insbesondere Einzelräder, für den Reinigungswagen anzubringen. Weiterhin ist zumindest ein Querverbindungselement vorgesehen, das die beiden Seitenwände in einem mittleren Bereich ihrer Längserstreckung miteinander verbindet.

Diese erfindungsgemäße Rahmenstruktur des Reinigungswagens kommt ohne Metallteile aus, und es fallen keinerlei Montagearbeiten zur Herstellung der Rahmenstruktur an. Die Rahmenstruktur aus Kunststoff, etwa einem Kunstharzwerkstoff oder Plastik, kann in einem einzigen Arbeitsgang hergestellt werden. Es sind lediglich noch die Räder anzubringen und, falls gewünscht, ein separater Griffbügel.

Besondere Vorteile der Erfindung liegen in der Beständigkeit der Rahmenstruktur gegen chemisch aggressive Reinigungsmittel, denen die Rahmenstruktur während der Benutzung des Reinigungswagens oder bei den regelmäßigen Desinfektionen ausgesetzt ist, denen Reinigungsausrüstungen unterzogen werden müssen, und in der aufgrund der nicht vorhandenen Montageverbindungen ausgesprochen soliden Beschaffenheit des Reinigungswagens.

Der erfindungsgemäße Reinigungswagen kann in der Regel mit zwei Putzeimern beladen werden, wobei auf jeder Seite des Querverbindungselementes ein Putzeimer untergebracht werden kann. In einer zweckmäßigen Ausgestaltung können dabei an der Innenseite der Seitenwände und gegebenenfalls auch am Querverbindungselement Laschen, Absätze, Randabschnitte oder dergleichen ausgebildet sein, um einen Putzeimer auf jeweils einer Seite des Querverbindungselementes in dem sich zwischen dem Querverbindungselement und den beiden Seitenwänden ergebenden Raum stabil abzustützen. Solche Abschnitte für eine stabile Abstützung können entweder im Bodenbereich der Rahmenstruktur vorgesehen sein, um einen Putzeimer in dem genannten Raum sicher abstellen zu können, oder sie können in einem oberen Bereich der Rahmenstruktur vorgesehen sein, um einen Putzeimer beispielsweise mit dessen oberen Seitenrändern sicher einhängen zu können.

Weiterhin kann der erfindungsgemäße Reinigungswagen mit einer Auswringvorrichtung versehen werden, die an dem zumindest einen Querverbindungselement angebracht oder eingehängt werden kann. Das Querverbindungselement dient dabei gleichzeitig als Gegenhalte- bzw. Reaktionsfläche gegen den während des Auswringens von der Auflagewand der Auswringvorrichtung ausgeübten Druck.

Erfindungsgemäß wird also ein ausgesprochen wirtschaftlicher Reinigungswagen geschaffen, der sowohl in der Produktion als auch bei der Wartung niedrige Kosten verursacht und dabei seine große Solidität beibehält.

In einer günstigen Ausführungsform ist jede Seitenwand des Reinigungswagens bügelförmig ausgebildet, wobei jedes der beiden Enden der Seitenwand in einem Anschlußabschnitt zur Anbringung eines Einzelrades endet. Durch die bügelförmige Gestalt der Seitenwand ergibt sich eine materialsparende Konstruktion der Rahmenstruktur. In einer bevorzugten Ausführungsform weist jede Seitenwand einen bockartigen Mittelabschnitt und zwei Beine auf, die sich beidseitig vom Mittelabschnitt weg erstrecken. Eine so ausgebildete Seitenwand ähnelt in ihrer Gestalt der Form eines Kleiderbügels. Am freien Ende des Beins kann dann beispielsweise ein Einzelrad angebracht werden.

Vorzugsweise umfaßt das zumindest eine Querverbindungselement eine obere Quertraverse und eine davon beabstandete untere Quertraverse. In einer günstigen Ausgestaltung ist die obere Quertraverse als Verbindungsbügel ausgeführt und in einem oberen Endbereich der Seitenwände angeschlossen. Falls die Seitenwände, wie zuvor erläutert, einen bockartigen Mittelabschnitt aufweisen, verbindet dieser Verbindungsbügel vorteilhafterweise die oberen Enden dieser bockartigen Mittelabschnitte. Die obere Quertraverse kann dann gut als Griff für den Reinigungswagen verwendet werden. An der oberen Quertraverse kann aber auch eine Auswringvorrichtung eingehängt werden und diese läßt sich dann vom Benutzer des Reinigungswagens bequem erreichen, um Putzlappen oder dergleichen auszuwringen. Die untere Quertraverse gibt dann, wie oben erläutert, der Auswringvorrichtung den nötigen Gegenhalt.

In einer günstigen Ausführungsform sind die obere Quertraverse und die untere Quertraverse als flächige, in einer gemeinsamen Ebene liegende Verbindungswand mit einer dazwischenliegenden fensterartigen Öffnung ausgebildet. Diese Ausgestaltung ist fertigungstechnisch günstig und der flächige Grundkörper des Querverbindungselementes, der lediglich durch die fensterartige Öffnung unterbrochen ist, führt zu einer stabilen und steifen Gesamtkonstruktion.

In einer vorteilhaften Ausführungsform sind zwischen den längsseitigen Enden der beiden Seitenwände zwei stirnseitige Quertraversen vorgesehen, die aus Kunststoff einstückig mit der Rahmenstruktur ausgebildet sind. Falls also die Seitenwände beispielsweise bügelförmig ausgebildet sind, sind die freien Enden der bügelförmigen Seitenwände dann über diese stirnseitigen Quertraversen miteinander verbunden, so daß die Gesamtkonstruktion des Reinigungswagens noch steifer wird. Vorzugsweise sind die stirnseitigen Quertraversen als Querträger mit L-förmigem Querschnitt ausgebildet, wobei sich ein unterer Schenkel jedes Querträgers horizontal nach innen und ein oberer Schenkel jedes Querträgers vertikal nach oben erstreckt. Diese im Querschnitt L-förmigen Schenkel bilden so eine Umrandung, die der Ladung, also in der Regel den Putzeimern einen Halt nach unten und in Längsrichtung gibt.

Vorzugsweise erstreckt sich zwischen den stirnseitigen Quertraversen zumindest eine Längstraverse, die aus Kunststoff einstückig mit der Rahmenstruktur ausgebildet ist. Zusammen mit den zuvor erläuterten stirnseitigen Quertraversen ergibt sich so eine Ladefläche, auf die beidseits des Querverbindungselementes Putzeimer abgestellt werden können. Ein Verrutschen der abgestellten Putzeimer wird seitlich durch die Seitenwände und in Längsrichtung durch das Querverbindungselement und die vertikalen Schenkel der stirnseitigen Quertraversen verhindert.

Zweckmäßigerweise ist die zumindest eine Längstraverse in ihrem mittleren Bereich einstückig an das zumindest eine Querverbindungselement angeschlossen. Durch diese Maßnahme erhöht sich die Stabilität der zuvor angesprochenen Ladeflächen, da die zumindest eine Längstraverse in ihrem Mittelbereich zusätzlich gestützt wird. Auch die Gesamtkonstruktion gewinnt dadurch an Solidität. In einer günstigen Ausgestaltung ist die zumindest eine Längstraverse in Form zweier beabstandeter Längsträger ausgebildet und der Anschluß der beiden Längsträger an das zumindest eine Querverbindungselement erfolgt über zwei im wesentlichen vertikale Trägerabschnitte, die im unteren Bereich des Querverbindungselementes ausgebildet sind. Falls das Querverbindungselement, wie oben erläutert, aus einer oberen und einer unteren Quertraverse besteht, erfolgt der Anschluß der Längsträger also an der unteren Quertraverse.

Günstigerweise bildet die zumindest eine Längstraverse eine gemeinsame Ebene mit den sich horizontal erstreckenden Schenkeln der stirnseitigen Querträger. So ergibt sich eine durchgehende glatte Ladefläche auf jeder Seite des Querverbindungselementes.

Vorzugsweise liegen die stirnseitigen Quertraversen, die zumindest eine Längstraverse und die Anschlußstellen zur Anbringung von Rädern im wesentlichen in einer gemeinsamen Ebene. Somit ergibt sich ein Wagenboden in einer Ebene und eine kompakte Gesamtkonstruktion.

In einer bevorzugten Ausführungsform sind die Seitenwände, die zumindest eine Längstraverse und zumindest die unteren Quertraversen der Rahmenstruktur als Hohlprofile gestaltet, die sich jeweils zur Bodenseite des Reinigungswagens hin öffnen. Durch diese Maßnahme erhält man eine materialsparende und dennoch steife und stabile Konstruktion. Die "unteren Quertraversen" umfassen dabei eine untere Quertraverse des Querverbindungselementes sowie die beiden stirnseitigen Quertraversen. Für eine zusätzliche Versteifung der Konstruktion sind die Hohlprofile vorzugsweise mit internen Versteifungsrippen oder -stegen versehen. Solche Versteifungsrippen oder -stege sorgen zudem auch für die Einhaltung der Abstände zwischen den Wänden der Hohlprofile.

In einer günstigen Ausgestaltung des erfindungsgemäßen Reinigungswagens erstrecken sich die Anschlußstellen zur Anbringung von Rädern von der Bodenseite des Reinigungswagens her in die Hohlprofile der Seitenwände hinein und sind dort einstückig mit den Seitenwänden in Form von Aufnahmen zum Einsetzen von Schäften von anzubringenden Einzelrädern ausgebildet. Mit anderen Worten befinden sich die Sitze zur Aufnahme von vorgefertigten Einzelrädern einstückig innerhalb der Hohlprofile. Bei einer bügelförmigen Gestalt der Seitenwände sind diese Sitze dann in den freien Enden der Beine untergebracht. Die anzubringenden Einzelräder können zusätzlich mit Pufferscheiben versehen sein, die dann zwischen den Radschäften und der einstückigen Rahmenstruktur aus Kunststoff zu liegen kommen und so für eine Dämpfung des Reinigungswagens sorgen. Die Pufferscheiben können beispielsweise aus einem Gummiwerkstoff bestehen.

Vorteilhafterweise sind an den Seitenwänden Aufnahmeöffnungen zur schwenkbaren Anbringung von zapfenförmigen Enden eines Griffbügels vorgesehen. Weiterhin sind Anschläge vorgesehen, um einen eingehängten Griffbügel zumindest in einer seiner maximalen Schwenkpositionen abzustützen. Ein solcher Griffbügel kann beispielsweise aus einem Rohr gebogen sein und dazu dienen, den Reinigungswagen bequem schieben zu können. Die genannten Anschläge dienen dazu, den Griffbügel in zumindest einer Schwenkposition zu fixieren, wenn der Reinigungswagen abgestellt wird.

Der Reinigungswagen weist erfindungsgemäß eine einstückig gefertigte Rahmenstruktur aus einem Kunststoffwerkstoff auf, und zwar insbesondere aus einem Kunstharzwerkstoff. Als Kunststoffwerkstoff kann ein geeigneter Werkstoff gewählt werden, der die Anforderungen hinsichtlich der Fertigung, der Formstabilität, der chemischen Beständigkeit und dergleichen erfüllt. Die einstückig aus Kunststoff hergestellte Rahmenstruktur umfaßt sämtliche vorangehend erläuterten Komponenten, also die Seitenwände, die oberen und unteren Quertraversen des Querverbindungselementes, die stirnseitigen Quertraversen, die Längstraversen und die Aufnahmen für die Räder und für einen Griffbügel.

Der erfindungsgemäße Reinigungswagen wird nachfolgend anhand eines bevorzugten Ausführungsbeispiels mit Bezug auf die beigefügten Zeichnungen näher erläutert. Es zeigen:
- Fig. 1: eine achsonometrische perspektivische Ansicht eines Ausführungsbeispiels des erfindungsgemäßen Reinigungswagens, der mit Rädern und Pufferscheiben ausgestattet ist;
- Fig. 2: eine perspektivische Ansicht des Reinigungswagens gemäß Fig. 1 von der Längsseite her;
- Fig. 3: eine weitere perspektivische Ansicht des Reinigungswagens gemäß Fig. 1 von der Längsseite her;
- Fig. 4: eine Draufsicht auf den Reinigungswagen von Fig. 1;
- Fig. 5: eine Ansicht von unten des Reinigungswagens von Fig. 1 ohne Räder und Pufferscheiben;
- Fig. 6: eine perspektivische Ansicht des Reinigungswagens von Fig. 1 mit einem zusätzlichen Griffbügel;
- Fig. 7: eine perspektivische Ansicht des Griffbügels von Fig. 6;
- Fig. 8: eine perspektivische Ansicht des Reinigungswagens von Fig. 1 von der Stirnseite her mit einem darauf abgestellten Putzeimer;
- Fig. 9: eine perspektivische Ansicht des Reinigungswagens von Fig. 6 mit zwei darauf abgestellten Putzeimern;
- Fig. 10: eine perspektivische Ansicht des Reinigungswagens von Fig. 9 mit einer zusätzlich angebrachten Auswringvorrichtung;
- Fig. 11: eine Längsschnittansicht des Reinigungswagens von Fig. 4 entlang der Schnittlinie X-X; und
- Fig. 12: eine Querschnittsansicht des Reinigungswagens von Fig. 4 entlang der Schnittlinie Y-Y.

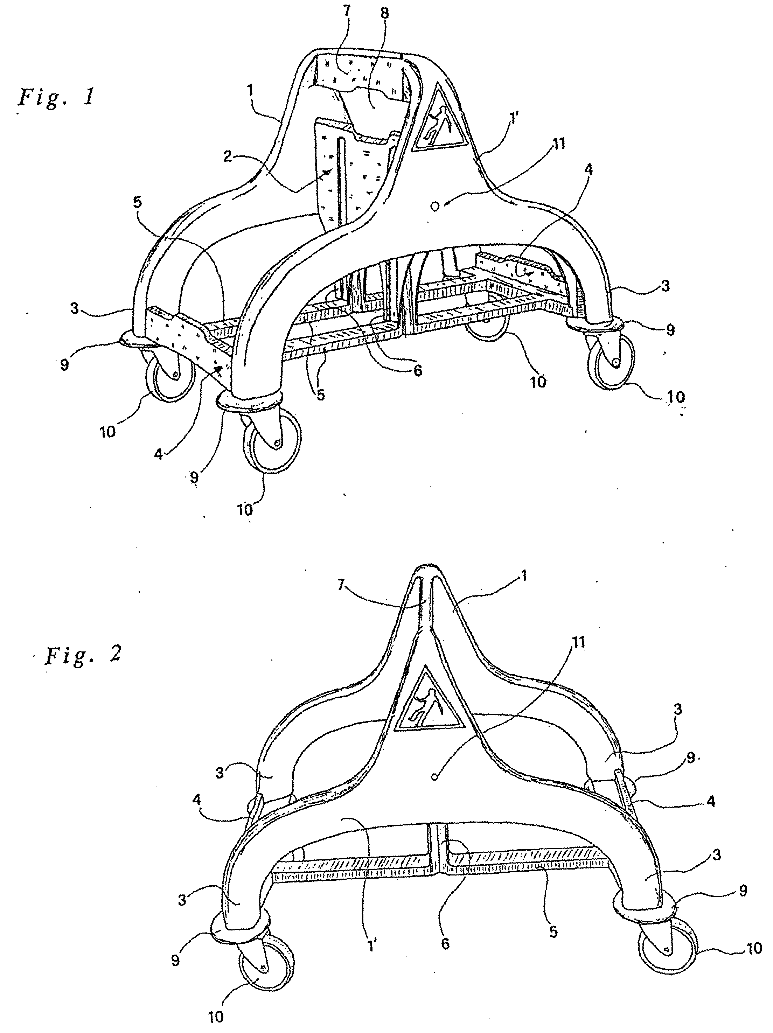

Fig. 1 zeigt eine axonometrische Ansicht eines Ausführungsbeispiels des mit Rädern und Pufferscheiben ausgestatteten erfindungsgemäßen Reinigungswagens. Die einstückig aus Kunststoff gefertigte Rahmenstruktur des Reinigungswagens besteht aus zwei bügelartig geformten Seitenwänden 1, 1' mit einem bockartigen Mittelabschnitt, von dem sich beidseitig Beine 3 wegerstrecken, zwei mittleren Querverbindungselementen 2, 7, die die beiden Seitenwände 1, 1' in der Mitte miteinander verbinden, zwei L-förmigen Querträgern 4, die die Seitenwände 1, 1' auf Höhe der unteren Enden der Beine 3 miteinander verbinden, und zwei Längsträgern 5 in der Form eines umgekehrten U, die komplanar von den unteren Schenkeln der L-förmigen Querträger 4 ausgehen und mit letzteren eine Ladefläche bilden.

Vom unteren Querverbindungselement 2, das die Seitenwände 1, 1' in der Mitte miteinander verbindet, sind zwei Trägerabschnitte 6 nach unten gezogen, so daß sie an die zwei Längsträger 5 angeschlossen sind und diese in der Mitte abstützen. Somit wird die Länge der Längsträger 5 in der Mitte unterbrochen, um die Durchbiegungen der Längsträger zu minimieren.

Oben sind die beiden Seitenwände 1, 1' durch das obere Querverbindungselement 7 miteinander verbunden, das als Verbindungssteg 7 ausgeführt ist und eine Ebene mit dem darunter befindlichen unteren Querverbindungselement 2 bildet. Zwischen dem Verbindungssteg 7 und dem unteren Querverbindungselement 2 ist eine fensterartige Öffnung 8 ausgebildet. Der Verbindungssteg 7 kann so als Griff benutzt werden.

Die L-förmigen Querträger 4, die die freien Enden der Beine 3 der Seitenwände 1, 1' miteinander verbinden, bilden zusammen mit den beiden Längsträgern 5, die in der Mitte von den Trägerabschnitten 6 des unteren Querverbindungselementes 2 getragen werden, eine Ladefläche.

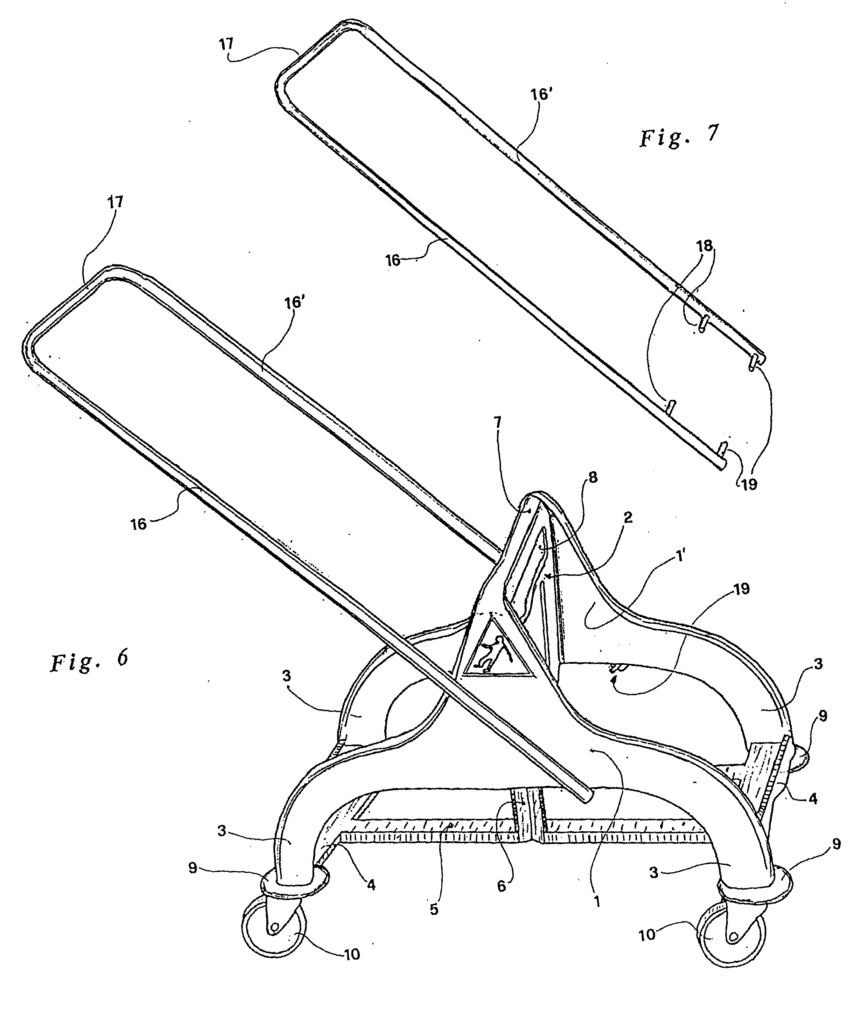

Der Reinigungswagen ist mit Rädern 10 und mit Pufferscheiben 9 ausgestattet. Das Bezugszeichen 11 bezeichnet eine Aufnahmeöffnung in jeder der beiden Seitenwände 1, 1', in die jeweils ein Zapfen 18 eingesteckt wird, mit dem ein am Reinigungswagen anzubringender Griffbügel 17 (siehe Fig. 7) ausgestattet ist.

Auch in den weiteren Figuren 2 bis 12 sind die gleichen Komponenten mit den gleichen Bezugszeichen bezeichnet, so daß auch hinsichtlich der weiteren Figuren auf die vorangehenden Ausführungen zur Fig. 1 verwiesen wird.

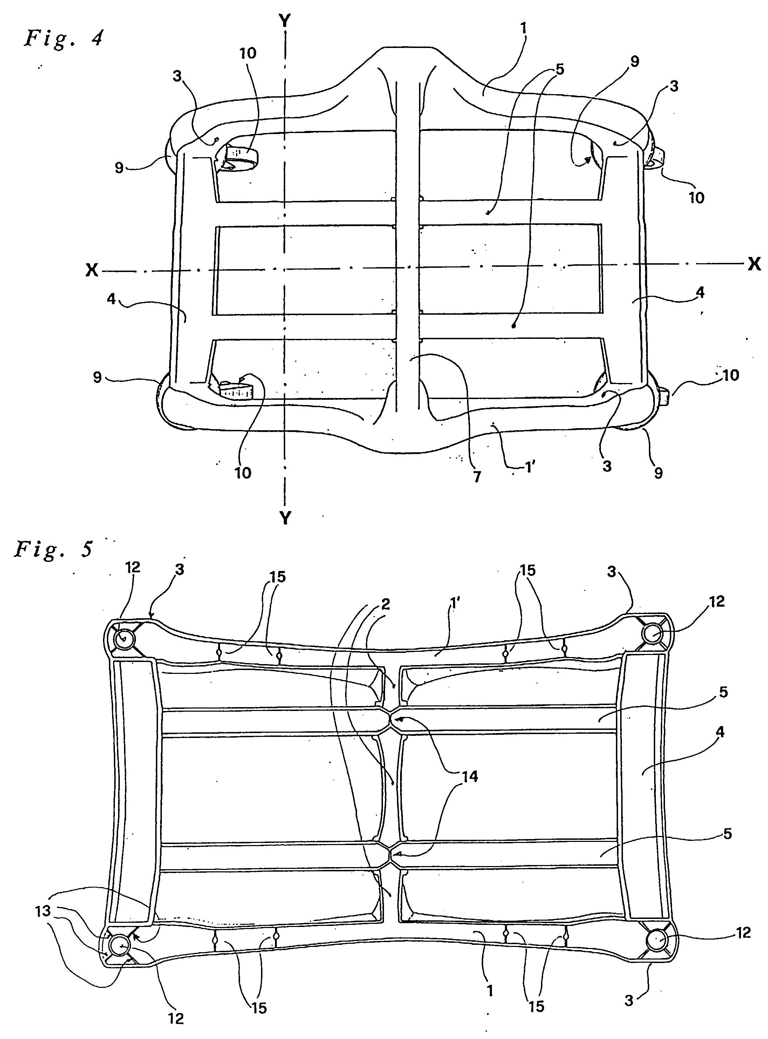

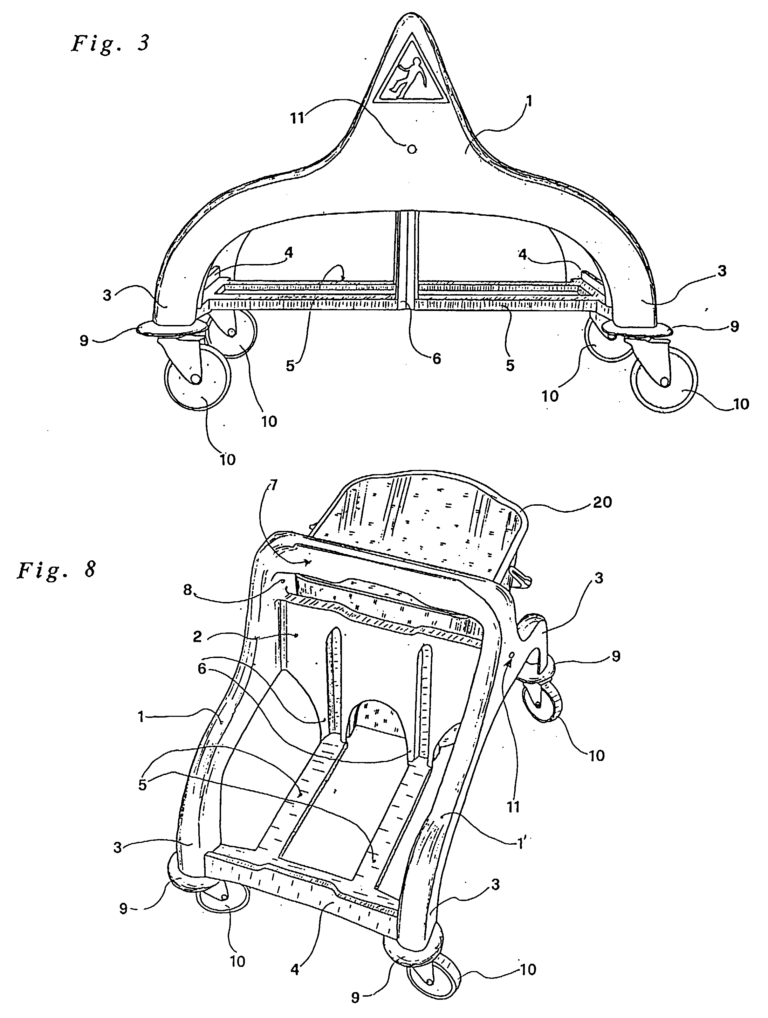

Fig. 5 zeigt den Reinigungswagen von Fig. 1 in einer Ansicht von unten ohne Räder 10 und ohne Pufferscheiben 9. Mit den Bezugszeichen 12 sind Aufnahmen bezeichnet, in die die Räderschäfte eingesetzt werden. Die rohrförmigen Sitze für die Räderschäfte sind über Stege einstückig mit den Seitenwänden 1, 1' verbunden. Wie in Fig. 5 zu erkennen ist, sind die Seitenwände 1, 1', die Querträger 4, die Längsträger 5 sowie das untere Querverbindungselement 2 jeweils in Form von Hohlprofilen ausgestaltet, die zur Bodenseite des Reinigungswagens hin offen sind. Durch Verstärkungsrippen 15 werden die Wände der Hohlprofile versteift. Ebenso sind Versteifungsrippen 14 an den Stellen vorgesehen, an denen die Längsträger 5 mit den Trägerabschnitten 6 des unteren Querverbindungselementes 2 zusammentreffen. Die an die Sitzen 12 zur Aufnahme der Räderschäfte angebrachten Verstärkungsstege sind mit dem Bezugszeichen 13 gekennzeichnet.

In Fig. 6 ist der Reinigungswagen mit einem zusätzlichen Griffbügel 17 versehen, der an der Rahmenstruktur des Reinigungswagens eingehängt ist. Wie in Fig. 7 dargestellt, besteht der Griffbügel 17 aus einem Rohr, das U-förmig gebogen ist, und an seinen beiden Schenkeln 16, 16' zwei gegenüberliegende Zapfen 18 sowie zwei weitere, an den freien Enden der Schenkel angeordnete Zapfen 19 aufweist. Der Griffbügel 17 wird mit den Zapfen 18 in die Aufnahmeöffnungen 11 eingesteckt und ist somit schwenkbar um diese Aufnahmeöffnungen gelagert. Die unteren Ränder der Seitenwände 1, 1' dienen als Anschläge für die Zapfen 19, so daß der Griffbügel 17 in zwei maximalen Schwenkpositionen abgestützt wird. Die eine maximale Schwenkposition ist in Fig. 6 dargestellt. Dort ist ersichtlich, wie die Zapfen 19 an den unteren Rändern der Seitenwände 1, 1' anschlagen. Die Montage bzw. Demontage des Griffbügels 17 erfolgt, indem die beiden Schenkel 16, 16' elastisch auseinandergezogen und in die Aufnahmeöffnungen 11 eingesteckt bzw. elastisch auseinandergezogen und daraus herausgenommen werden.

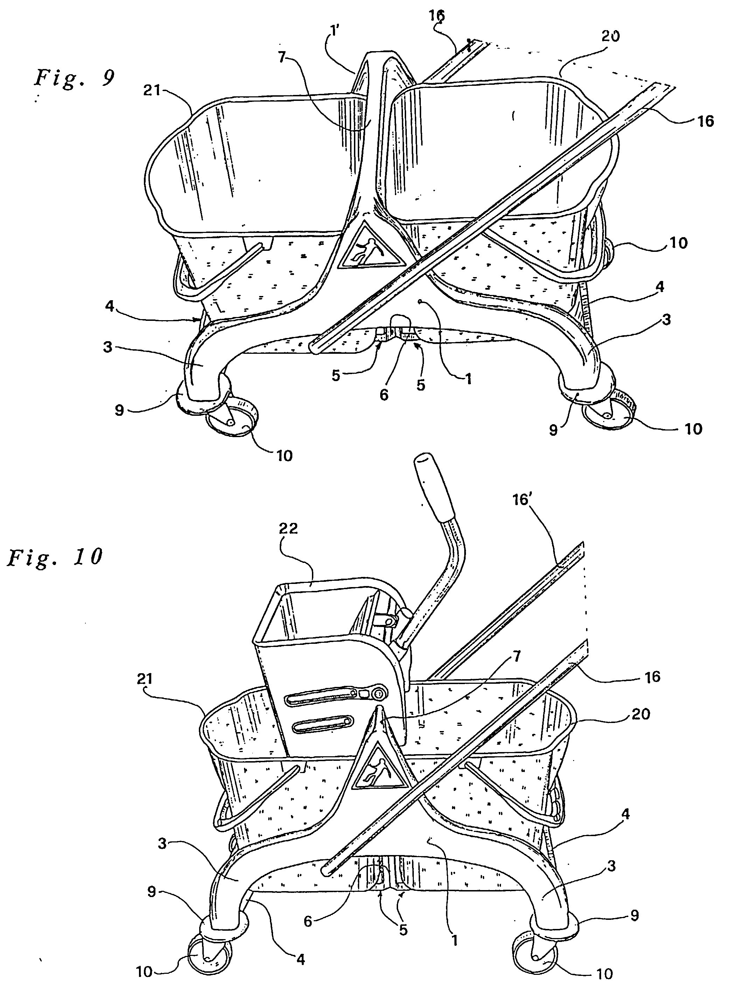

In Fig. 8 ist der Reinigungswagen mit einem Putzeimer 20 beladen. Der Putzeimer wurde auf die von den Querträgern 4 und den Längsträgern 5 gebildete Fläche auf der einen Seite des unteren Querverbindungselementes 2 abgestellt. Wie in Fig. 1 erkennbar ist, weisen die Querträger 4 L-förmige Querschnitte auf, wobei der eine Schenkel des Querträgers vertikal nach oben und der andere Schenkel des Querträgers horizontal nach innen verläuft. Die horizontalen Schenkel bilden mit den Längsträgern 5 eine durchgehende Ladefläche, während die vertikalen Schenkel eine Einfassung für die auf der Ladefläche abgestellten Putzeimer bilden, so daß ein Herunterrutschen des Putzeimers in Längsrichtung des Reinigungswagens verhindert wird.

In Fig. 9 ist der Reinigungswagen mit zwei Putzeimern 20, 21 beladen, von denen jeweils ein Putzeimer auf jeder Seite des Verbindungssteges 7 abgestellt ist.

In Fig. 10 ist zusätzlich zu den beiden Putzeimern 20, 21 eine Auswringvorrichtung 22 am Verbindungssteg 7 eingehängt. Wenn keine Auswringvorrichtung eingehängt ist, dient der Verbindungssteg 7 als Griff. Bei eingehängter Auswringvorrichtung 22 sorgt das untere Querverbindungselement 2 für den notwendigen Gegenhalt während des Auswringvorgangs.

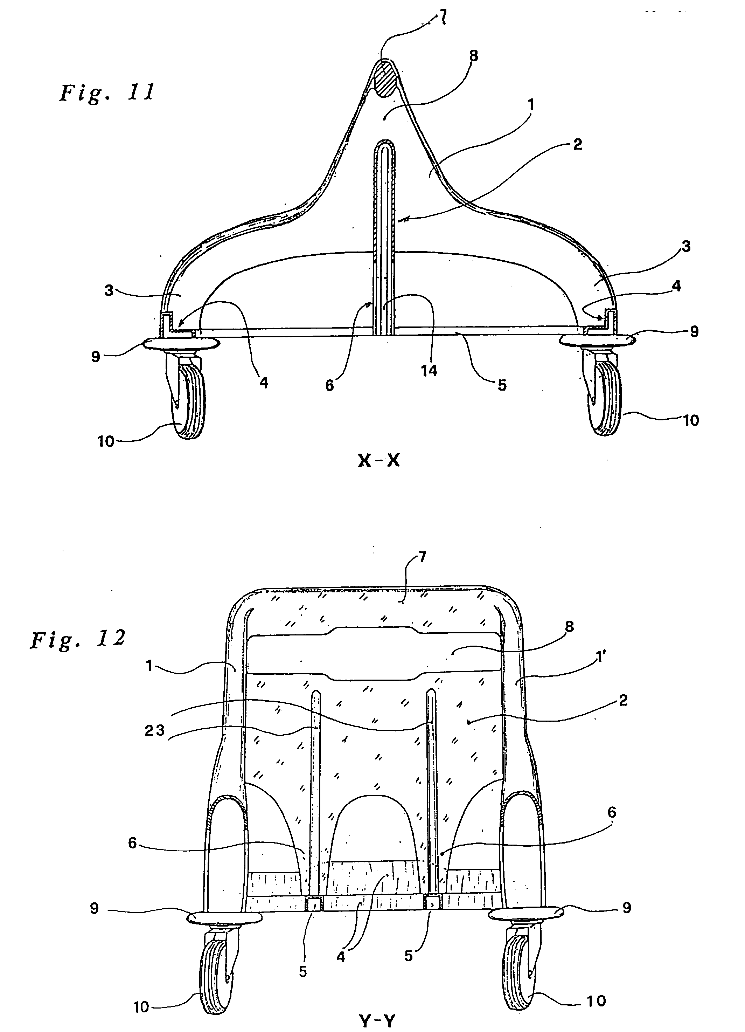

Fig. 11 zeigt einen Längsschnitt durch den Reinigungswagen entlang der Linie X-X in Fig. 4. Hier ist gut die L-förmige Querschnittsgestaltung der Querträger zu erkennen. Auch das Hohlprofil des unteren Querverbindungselementes 2 ist gut sichtbar. Der obere Verbindungssteg 7 weist an der Schnittstelle einen Vollquerschnitt auf. Auch die koplanare Ausbildung der aus den horizontalen Schenkeln der Querträger 4 und den Längsträgern 5 gebildeten Ladefläche ist in dieser Ansicht deutlich erkennbar.

Fig. 12 zeigt einen Querschnitt durch den Reinigungswagen entlang der Linie Y-Y in Fig. 4. In dieser Ansicht ist der U-förmige Querschnitt der Längsträger 5 zu erkennen. Das untere, als flächige Wand ausgeführte Querverbindungselement 2 ist mit zwei vertikal verlaufenden Verstärkungsfurchen 23 versehen.

## Patentansprüche

1. Reinigungswagen, insbesondere für den Transport von Putzeimern und zum Halten einer Auswringvorrichtung, mit einer Rahmenstruktur aus
- zwei voneinander beabstandeten längsseitigen Seitenwänden (1, 1'), von denen jede Seitenwand (1, 1') zwei Anschlußabschnitte (12) zur Anbringung von Rädern aufweist, und
- zumindest einem Querverbindungselement (2, 7), das die beiden Seitenwände (1, 1') in einem mittleren Bereich ihrer Längserstreckung miteinander verbindet,
- wobei die Rahmenstruktur (1, 1', 2, 7) einstückig aus einem Kunststoffwerkstoff gefertigt ist.

2. Reinigungswagen nach Anspruch 1,
**dadurch gekennzeichnet, daß**
jede Seitenwand (1, 1') bügelförmig ausgebildet ist, wobei jedes der beiden Enden (3) der Seitenwand (1, 1') in einem Anschlußabschnitt (12) zur Anbringung eines Einzelrades endet.

3. Reinigungswagen nach Anspruch 2,
**dadurch gekennzeichnet, daß**
jede Seitenwand (1, 1') einen bockartigen Mittelabschnitt und zwei Beine (3) aufweist, die sich beidseitig vom Mittelabschnitt weg erstrecken.

4. Reinigungswagen nach einem der Ansprüche 1 bis 3,
**dadurch gekennzeichnet, daß**
das zumindest eine Querverbindungselement eine obere Quertraverse (7) und eine davon beabstandete untere Quertraverse (2) umfaßt.

5. Reinigungswagen nach Anspruch 4,
**dadurch gekennzeichnet, daß**
die obere Quertraverse als Verbindungsbügel (7) ausgeführt und in einem oberen Endbereich der Seitenwände (1, 1') angeschlossen ist.

6. Reinigungswagen nach Anspruch 4 oder 5,
**dadurch gekennzeichnet, daß**
die obere Quertraverse (7) und die untere Quertraverse (2) als flächige, in einer gemeinsamen Ebene liegende Verbindungswand mit einer dazwischenliegenden fensterartigen Öffnung (8) ausgebildet sind.

7. Reinigungswagen nach einem der Ansprüche 1 bis 6,
**dadurch gekennzeichnet, daß**
zwischen den längsseitigen Enden der beiden Seitenwände (1, 1') zwei stirnseitige Quertraversen (4) vorgesehen sind.

8. Reinigungswagen nach Anspruch 7,
**dadurch gekennzeichnet, daß**
die stirnseitigen Quertraversen als Querträger (4) mit L-förmigem Querschnitt ausgebildet sind, wobei sich ein unterer Schenkel jedes Querträgers (4) horizontal nach innen und ein oberer Schenkel jedes Querträgers (4) vertikal nach oben erstreckt.

9. Reinigungswagen nach Anspruch 7 oder 8,
**dadurch gekennzeichnet, daß**
sich zwischen den stirnseitigen Quertraversen (4) zumindest eine Längstraverse (5) erstreckt.

10. Reinigungswagen nach Anspruch 9,
**dadurch gekennzeichnet, daß**
die zumindest eine Längstraverse (5) in ihrem mittleren Bereich an das zumindest eine Querverbindungselement (2) angeschlossen ist.

11. Reinigungswagen nach Anspruch 10,
**dadurch gekennzeichnet, daß**
die zumindest eine Längstraverse in Form zweier beabstandeter Längsträger (5) ausgebildet ist und daß der Anschluß der beiden Längsträger (5) an das zumindest eine Querverbindungselement (2) über zwei im wesentlichen vertikale Trägerabschnitte (6) erfolgt, die im unteren Bereich des Querverbindungselementes (2) ausgebildet sind.

12. Reinigungswagen nach einem der Ansprüche 9 bis 11,
**dadurch gekennzeichnet, daß**
die zumindest eine Längstraverse (5) eine gemeinsame Ebene mit den sich horizontal erstreckenden Schenkeln der Querträger (4) bildet.

13. Reinigungswagen nach einem der Ansprüche 8 bis 12,
**dadurch gekennzeichnet, daß**
die stirnseitigen Quertraversen (4), die zumindest eine Längstraverse (5) und die Anschlußstellen (12) zur Anbringung von Rädern im wesentlichen in einer gemeinsamen Ebene liegen.

14. Reinigungswagen nach einem der Ansprüche 1 bis 13,
**dadurch gekennzeichnet, daß**
die Seitenwände (1, 1'), die zumindest eine Längstraverse (5) und zumindest die unteren Quertraversen (2, 4) der Rahmenstruktur als Hohlprofile gestaltet sind, die sich jeweils zur Bodenseite des Reinigungswagens hin öffnen.

15. Reinigungswagen nach Anspruch 14,
**dadurch gekennzeichnet, daß**
die Hohlprofile mit internen Versteifungsrippen oder -stegen (15) versehen sind.

16. Reinigungswagen nach Anspruch 14 oder 15,
**dadurch gekennzeichnet, daß**
sich die Anschlußstellen zur Anbringung von Rädern von der Bodenseite des Reinigungswagens her in die Hohlprofile der Seitenwände (1, 1') hineinerstrecken und dort einstückig mit den Seitenwänden (1, 1') in Form von Aufnahmen (12) zum Einsetzen von Schäften von anzubringenden Einzelrädern ausgebildet sind.

17. Reinigungswagen nach einem der Ansprüche 1 bis 16,
**dadurch gekennzeichnet, daß**
an den Seitenwänden (1, 1') Aufnahmeöffnungen zur schwenkbaren Anbringung von zapfenförmigen Enden (18) eines Griffbügels (17) sowie Anschläge zur Abstützung eines eingehängten Griffbügels (17) in zumindest einer maximalen Schwenkposition vorgesehen sind.

18. Reinigungswagen nach einem der Ansprüche 1 bis 17,
**dadurch gekennzeichnet, daß**
die Rahmenstruktur aus einem Kunstharzwerkstoff hergestellt ist.

## Claims

1. Cleaning trolley, in particular for transporting cleaning buckets and for holding a wringer mechanism a frame, comprising a structure of
- two longitudinal side walls (1, 1'), which are at a distance from each other and of which each side wall (1, 1') comprises two connecting sections (12) for mounting wheels, and
- at least one cross connecting element (2, 7) which joins the two side walls (1, 1') in a central area of its longitudinal extent, and
- the frame structure (1, 1', 2, 7) is made in one piece of a plastic material.

2. Cleaning trolley according to Claim 1, **characterised in that** each side wall (1, 1') is yokeshaped, and each of the two ends (3) of the side wall (1, 1') terminates in a connecting section (12) for mounting a single wheel.

3. Cleaning trolley according to Claim 2, **characterised in that** each side wall (1, 1') comprises a bocklike central section and two legs (3) which extend on both sides away from the central section.

4. Cleaning trolley according to one of Claims 1 to 3, **characterised in that** the at least one cross connecting element includes an upper cross traverse (7) and a therefrom distanced lower cross traverse (2).

5. Cleaning trolley according to Claim 4, **characterised in that** the upper cross traverse is designed as a connecting yoke (7) and joined in an upper end area of the side walls (1, 1').

6. Cleaning trolley according to Claim 4 or 5, **characterised in that** the upper cross traverse (7) and the lower cross traverse (2) are designed as a surface connecting wall lying in a common plane and with a windowlike opening (8) thereinbetween.

7. Cleaning trolley according to one of Claims 1 to 6, **characterised in that** two endsided cross traverses (4) are provided between the longitudinal side ends of both side walls (1, 1').

8. Cleaning trolley according to Claim 7, **characterised in that** the endsided cross traverses are designed as cross supports (4) of L-shaped cross-section, and a lower shank of each cross support (4) extends horizontally inwards and an upper shank of each cross support (4) extends vertically upwards.

9. Cleaning trolley according to Claim 7 or 8, **characterised in that** at least one longitudinal traverse (5) extends between the endsided cross traverses (4).

10. Cleaning trolley according to Claim 9, **characterised in that** the at least one longitudinal traverse (5) is in its central area joined to the at least one cross connecting element (2).

11. Cleaning trolley according to Claim 10, **characterised in that** the at least one longitudinal traverse is designed in the form of two spaced longitudinal supports (5), and the two longitudinal supports (5) are joined to the at least one cross connecting element (2) via two essentially vertical support sections (6) which are configured in the lower area of the cross connecting element (2).

12. Cleaning trolley according to one of Claims 9 to 11, **characterised in that** the at least one longitudinal traverse (5) forms a common plane with the horizontally extending shanks of the cross supports (4).

13. Cleaning trolley according to one of Claims 8 to 12, **characterised in that** the endsided cross traverses (4), the at least one longitudinal traverse (5) and the joining points (12) for mounting wheels lie essentially in a common plane.

14. Cleaning trolley according to one of Claims 1 to 13, **characterised in that** the side walls (1, 1'), the at least one longitudinal traverse (5) and at least the lower cross traverses (2, 4) of the frame structure are hollow profiles which respectively open towards the bottom side of the cleaning trolley.

15. Cleaning trolley according to Claim 14, **characterised in that** the hollow profiles are provided with internal reinforcing ribs or webs (15).

16. Cleaning trolley according to Claim 14 or 15, **characterised in that** the joining points for mounting wheels extend from the bottom side of the cleaning trolley into the hollow profiles of the side walls (1, 1') where they are designed in one piece with the side walls (1, 1') in the shape of receptacles (12) for insertion of shafts of individual wheels which are to be mounted.

17. Cleaning trolley according to one of Claims 1 to 16, **characterised in that** on the side walls (1, 1') are provided receiving openings for pivotal mounting of pinshaped ends (18) of a handle (17) as well as stops for supporting a mounted handle (17) in at least one maximum pivotal position.

18. Cleaning trolley according to one of Claims 1 to 17, **characterised in that** the frame structure is made of a synthetic resin material.

## Revendications

1. Chariot de nettoyage, en particulier pour le transport de seaux de nettoyage et pour supporter un dispositif d'essorage, comportant une structure de cadre constituée de:
- deux parois latérales longitudinales (1, 1') situées à une certaine distance l'une de l'autre, chacune de ces parois latérales (1, 1') présentant deux éléments de raccordement (12) pour l'installation de roues, et
- au moins un élément de liaison transversal (2, 7), qui relie entre elles les deux parois latérales (1, 1') dans la zone du milieu de leur extension longitudinale,
- la structure de cadre (1, 1', 2, 7) étant réalisée en une seule pièce, en matériau en matière plastique.

2. Chariot de nettoyage suivant la revendication 1, caractérisé en ce que chaque paroi latérale (1, 1') est réalisée avec une forme d'arceau, chacune des deux extrémités (3) des parois latérales (1, 1') se terminant en un élément de raccordement (12) pour la mise en place d'une roue indépendante.

3. Chariot de nettoyage suivant la revendication 2, caractérisé en ce que chaque paroi latérale (1, 1') comporte un élément central formant tréteau et deux jambes (3) qui s'étendent des deux côtés, en s'éloignant de l'élément central.

4. Chariot de nettoyage suivant l'une des revendications 1 à 3, caractérisé en ce qu'un élément transversal de liaison, au moins au nombre de un, comprend une entretoise transversale supérieure (7) et une entretoise transversale inférieure (2) placée à une certaine distance de cette dernière.

5. Chariot de nettoyage suivant la revendication 4, caractérisé en ce que l'entretoise transversale supérieure est réalisée sous la forme d'un arceau de liaison (7) et est raccordée dans une zone terminant les parois latérales (1, 1') vers le haut.

6. Chariot de nettoyage suivant la revendication 4 ou 5, caractérisé en ce que l'entretoise transversale supérieure (7) et l'entretoise transversale inférieure (2) sont réalisées sous la forme de parois de liaison planes, situées dans un même plan, et comportant entre elles une ouverture (8) formant fenêtre.

7. Chariot de nettoyage suivant l'une des revendications 1 à 6, caractérisé en ce qu'entre les extrémités situées du côté longitudinal des deux parois latérales (1, 1'), sont prévues deux entretoises transversales (4) situées du côté frontal.

8. Chariot de nettoyage suivant la revendication 7, caractérisé en ce que les entretoises transversales situées du côté frontal sont réalisées sous la forme de poutres transversales (4) comportant une section en forme de L, une aile inférieure de chaque poutre transversale (4) s'étendant horizontalement vers l'intérieur et une aile supérieure de chaque poutre transversale (4) s'étendant verticalement vers le haut.

9. Chariot de nettoyage suivant la revendication 7 ou 8, caractérisé en ce qu'au moins une entretoise longitudinale (5) s'étend entre les entretoises transversales (4) situées du côté frontal.

10. Chariot de nettoyage suivant la revendication 9, caractérisé en ce qu'une entretoise longitudinale (5), au moins au nombre d'une, est raccordée, dans sa zone médiane, à l'élément transversal de liaison (2), au moins au nombre d'un.

11. Chariot de nettoyage suivant la revendication 10, caractérisé en ce qu'une entretoise longitudinale (5), au moins au nombre d'une, est réalisée sous la forme de deux poutres longitudinales (5) écartées l'une de l'autre, et en ce que le raccordement des deux poutres longitudinales (5) à l'élément de liaison transversal (2), au moins au nombre d'un, se fait au moyen de deux éléments de poutre (6) essentiellement verticaux, qui sont réalisés dans la zone inférieure de l'élément transversal de liaison (2).

12. Chariot de nettoyage suivant l'une des revendications 9 à 11, caractérisé en ce que l'entretoise longitudinale (5), au moins au nombre d'une, forme un même plan avec les ailes disposées horizontalement de la poutre transversale (4).

13. Chariot de nettoyage suivant l'une des revendications 8 à 12, caractérisé en ce que les entretoises transversales (4) situées du côté frontal, l'entretoise longitudinale (5), au moins au nombre d'une, et les points de raccordement (12) destinés à la mise en place de roues sont situées dans un plan commun.

14. Chariot de nettoyage suivant l'une des revendications 1 à 13, caractérisé en ce que les parois latérales (1, 1'), l'entretoise longitudinale (5), au moins au nombre d'une, et au moins les entretoises transversales (2, 4) de la structure de cadre sont conçues sous la forme de profilés creux s'ouvrant chacun vers la face du chariot de nettoyage tournée vers le sol.

15. Chariot de nettoyage suivant la revendication 14, caractérisé en ce que les profilés creux sont munis de nervures ou de barrettes internes de rigidification (15).

16. Chariot de nettoyage suivant la revendication 14 ou 15, caractérisé en ce que les points de raccordement pour la mise en place des roues pénètrent, depuis la face du chariot de nettoyage tournée vers le sol, dans le profilé creux des parois latérales (1, 1') et y sont réalisés, en formant une seule pièce avec les parois latérales (1, 1'), sous la forme de réceptacles (12) pour l'installation de tiges de roues indépendantes à y mettre en place.

17. Chariot de nettoyage suivant l'une des revendications 1 à 16, caractérisé en ce que, sur les parois latérales (1, 1'), sont prévues des ouvertures de réception pour y installer, de façon pivotante, des extrémités (18), en forme de tourillons d'un arceau formant poignée (17), ainsi que des butées pour l'appui d'un arceau formant poignée (17), qui y est accroché, dans au moins une position de basculement maximale.

18. Chariot de nettoyage suivant l'une des revendications 1 à 17, caractérisé en ce que la structure de cadre est réalisée dans un matériau en résine synthétique.
